# EUROPEAN PATENT APPLICATION

(11) **EP 1 936 414 A2**
(43) Date of publication of application: **25.06.2008**
(21) Application number: 07254671.6
(22) Date of filing: 01.12.2007
(51) Int. Cl.: G02B 6/36, G02B 6/42

(54) **Small optical package having multiple optically aligned soldered elements therein**

(30) Priority: 14.12.2006 US 869972 P
(71) Applicant: JDS Uniphase Corporation, Milpitas, CA 95035 (US)
(72) Inventor: Tai, Kuochou, Fremont CA 94536 (US); Wong, Andre, Vancouver British Columbia V6B 0B8 (CA)
(74) Representative: McKechnie, Neil Henry

(57) **Abstract**

A substantially thermally stable small optical package is disclosed which houses optically aligned elements forming an optical component. All of the elements are all directly soldered to a base member or directly soldered to a supporting member soldered to a common base member. The sealed container has a supporting base member made of stainless steel and a first optical fiber mount is directly soldered to the supporting base. A first optical fiber is directly soldered to the upper end of the first optical fiber mount. A similar arrangement is provided wherein a second optical fiber mount is directly soldered to the base and a second optical fiber is directly soldered to the upper end of the second optical fiber mount. A thin frequency doubling crystal is directly soldered to the stainless steel base member after being aligned with the two optical fibers. This design is extremely cost effective to manufacture and provides a component that is very thermally stable.

## Description

### Cross-reference to related applications

This application claims priority of U.S. Provisional Patent Application No. 60/869,972 filed December 14, 2006, entitled "A packaging design for fiber coupled nonlinear optical waveguide device" which is incorporated herein by reference for all purposes.

### Field of the Invention

This invention relates to a substantially thermally stable small optical package that houses a plurality of optically aligned elements forming an optical component, wherein the elements are all directly soldered to a base member or directly soldered to a supporting member soldered to a common base member.

Optical devices and components operational within optical systems are typically subjected to various thermal and mechanical loads and or stresses during their lifetime. An example of such optical devices is an optical filter assembly. An assembly of this type comprises two optical glass fibers inserted into capillary ferrules to produce fiber-ferrule sub-assemblies aligned with an optical filter assembly. The optical components of the filter assembly generally have graded-index (GRIN) lenses embedded into an insulating glass tube, which in turn are mechanically protected by a metal housing. These filter assemblies often exhibit insertion losses higher than desired, resulting in degraded overall performance of the communications system or module. The problem is particularly acute during exposure to ambient operating conditions where temperature is variable.

Input glass ferrules generally employ one of two designs. A single capillary suitable for containing multiple glass fibers or separate circular capillaries for each fiber have been used, each with relatively short fiber-receiving conical lead-in ends. With such input ferrules, the optical fiber is subjected to an unwanted S-bending over the short conical end. This excessive micro bending increases the insertion losses. Fiber-ferrule subassemblies employing such ferrules are manufactured by inserting the optical fibers stripped of their polymer coating into the respective ferrule capillaries; epoxy bonding the fibers into the ferrule capillaries, including the conical end portions; grinding and polishing an angled facet on the fiber-ferrule; and depositing on the polished surface an anti-reflection (AR) coating. Once finished, the fiber-ferrule is aligned and assembled with the collimating GRIN lens and then embedded into the insulating glass tube, which, in turn, is protected by a metal housing.

In many instances adhesives are used to secure fiber-ferrules to a base or support member within their package. In some instances these fiber-ferrules are laser welded to a support member.

A precise alignment achieved during initial assembly of a filter prior to final packaging can be easily decreased due to the adhesive curing process and the high temperature thermal cycles associated with laser welding during the final packaging of the components. Such manufacturing processes and resulting components have several problems resulting from stresses on the optical components due to the thermal contraction as a result of a thermal mismatch between the glass and metal materials, polymerization shrinkage in adhesive bonds, and structural constraints induced by bonding during encapsulation. These stresses lead to displacements of optical components during bonding, resulting in 0.3 to 1 dB or greater increases in the insertion loss.

In an attempt to provide a packaged component that is thermally stable and that will perform to required specifications over the lifetime of the device, adhesives such as epoxies, or bonding by laser welding was not considered practicable. Each of these has their associated drawbacks. Although Laser welding requires little set-up time and setting time, post weld shift, a known problem, can cause fibers housed in sleeves welded to support members to shift.

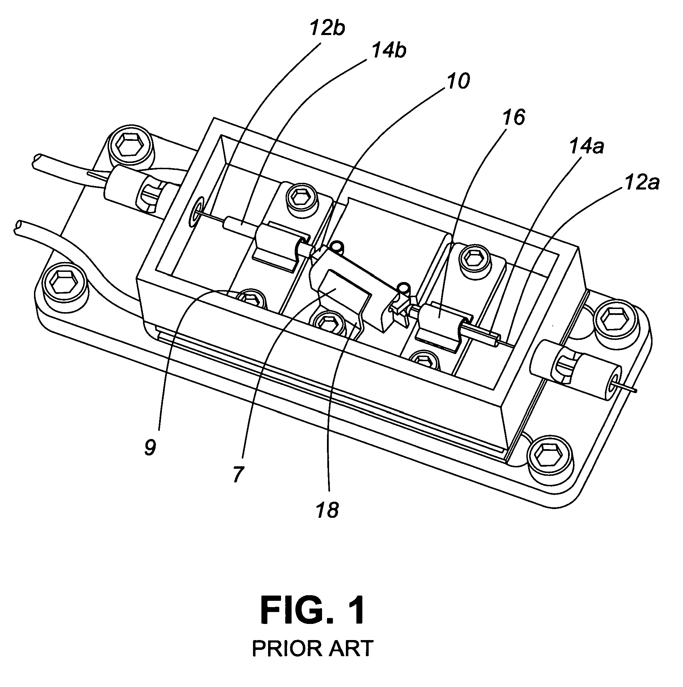

Fig. 1 is a diagram of an optical package that is the result of years of development in an attempt to automate the assembly process and to lessen manufacturing costs while providing a relatively small, thermally stable optically packaged component. The goal was to provide a packaged component wherein performance would not significantly degrade over the expected lifetime of the device. Problems related to cost, and reliability have resulted in the abandonment of this solution.

In Fig. 1 a non-linear frequency doubling crystal 10 performs filtering of an input signal and outputs a frequency doubled optical signal. In the manufacture of the component, optical fibers 12a and 12b held in sleeves must be precisely aligned so that light launched from the input fiber 12a to its output and through the frequency doubling crystal 10 must couple without undue loss into the output receiving optical fiber 12b and provide optimum filtering through the crystal 10.

In Fig. 1 a frequency doubling optical component is shown, having an input optical fiber 12a held in an optical sleeve or ferrule 14a, optically coupled to a frequency doubling crystal 10, and optically coupled to an output optical fiber 12b. The optical sleeve 14a is held down in a fixed position by clamp 16 which is laser welded to a base member beneath. The optical crystal is secured to a holder 18 which is clamped to the base by a clamp 7. Bolts 9 secure sub-base members to the package. It is evident that the numerous interfaces between elements within the package increase the likelihood of misalignment of components. Furthermore, having this many elements and fasteners within this package lessens available space for other components. The package shown in Fig. 1 is conveniently shown before the top is positioned and hermetically seals the package.

It is apparent from looking at the device in Fig. 1, that there are numerous interfaces wherein components are fixedly coupled to other components, and wherein these other components must be relatively aligned and secured to a common base member. Furthermore, the use of adhesives, laser welding, soldering, and clamping were all required in the assembly of this device.

Understandably, the more components that hold other components within an optical package, the greater the probability for misalignment during the lifetime of the device.

A simple scenario follows:

If an optical fiber is housed within a sleeve and the sleeve is bonded to a base member, there is a possibility that there will be relative movement of the optical fiber and the sleeve. Furthermore, there is the possibility that there will be relative movement between the optical sleeve and the base member.

However if the optical fiber is directly bonded to the base member, there is only the possibility of relative movement between the optical fiber and the base member. In this regard, it is preferable lessen the number of interfaces.

When optical components made of crystalline material are to be fixedly secured to a base, secure bonding is essential, especially if a crystalline slab is to be optically aligned with an input and an output optical waveguide or optical fiber to maximize output power and to achieve a desired filtering such as frequency doubling. Furthermore, since this crystalline material is birefringent, it is important that the material does not undergo a change in stress as a result of temperature variation due to a thermal mismatch between the base and the crystalline material.

Therefore, it is an object of this invention, to provide a package housing components wherein the components are optically aligned within certain tolerances, and wherein the components remain optically aligned within those tolerances.

It is also an object of the invention to provide a package with fewer interfaces than in the prior art device shown in Fig. 1, and to provide a package which due to having fewer elements and interfaces, provides space to place a cooler/heater within the package to maintain the temperature of the components within predetermined tolerances.

This result of this improvement over the prior art, is a package which has a better cooling response time, and which is relatively inexpensive to manufacture while providing accurate alignment throughout the working life of the device.

### Summary of the Invention

In accordance with an embodiment of the invention, there is provided, a sealed container, comprising;
a) a supporting base member consisting of a first material;
b) a first optical fiber mount having a height h₁, wherein the first optical fiber mount has a lower end and an upper end;
c) a first optical fiber directly soldered to the upper end of the first optical fiber mount;
d) a second optical fiber mount having a lower end and an upper end and having a height h₂;
e) a second optical fiber directly soldered to the upper end of the second optical fiber mount; and,
f) a thin optical element for modifying light passing therethrough mounted in the container, wherein the thin optical element has a planar bottom surface, and wherein the planar bottom surface is directly soldered to the base member, wherein only solder is present between the planar bottom surface and the base member, and, wherein the first and second optical fibers are aligned with the thin wafer so that light launched into one of the first and second optical fibers from an end extending from the sealed container passes through the thin optical element and exits the other of the first and second optical fibers extending out of the sealed container.

In accordance with another aspect of the invention, there is provided, a method of manufacturing a sealed container, comprising:
a) providing a supporting base member made of a first material;
b) providing a first optical fiber mount having a height h₁, wherein the first optical fiber mount has a lower end and an upper end;
c) providing a first optical fiber;
d) directly soldering the first optical fiber to the upper end of the first optical fiber mount;
e) providing a second optical fiber mount having a lower end and an upper end and having a height h₂;
f) providing a second optical fiber;
g) directly soldering the second optical fiber to the upper end of the second optical fiber mount; and,
h) providing a thin optical element having a planar bottom surface, for modifying light passing therethrough; and,
i) mounting the thin optical element in the container by directly soldering the planar bottom surface and the base member together, wherein the first and second optical fibers are aligned with the thin wafer so that light launched into one of the first and second optical fibers from an end extending from the sealed container passes through the thin optical element and exits the other of the first and second optical fibers extending out of the sealed container.

### BRIEF DESCRIPTION OF THE DRAWINGS

Exemplary embodiments of the invention will now be described in conjunction with the drawings in which:

Fig. 1 is a view illustrating a conventional packaged component having a plurality of interfaces.

Fig. 2 is a view of a packaged component in accordance with an embodiment of this invention wherein fewer parts and interfaces are required and wherein a filter is soldered to the package base.

Fig. 3 is a schematic side view of a base member having an input lensed optical fiber optically aligned with an output optical lensed fiber having a PPLN (poled lithium niobate) crystal there between wherein the optical fibers and the crystal are soldered to their supporting members.

Fig. 4 is a top view of the components shown in Fig. 3.

### Detailed Description

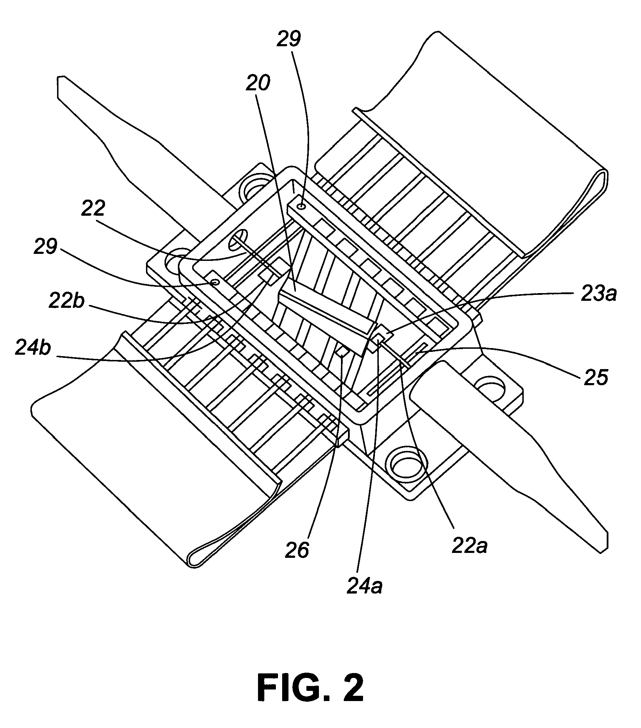

Turning now to Fig. 2 a photograph of a non-sealed container in accordance with the invention is shown, prior to placing and hermetically sealing a lid in place over the device. The device of Fig. 2 provides the same functionality as the device of Fig. 1. However the device of Fig. 1 requires the thermal electric cooler to be outside of the package due to the limited space. In Fig. 2 an input optical fiber 22a is shown soldered in place on a base 21 precisely aligned with the non-linear frequency doubling crystal 20 and with the output optical fiber 22b. The solder ball made of AuSn (gold tin) 24a is shown resting upon a low pedestal 23a is preferably a Zr02 ceramic such as ytterbium stabilized zirconium, which is also soldered to the base 21 of the container. Only solder is present between the optical fiber 22a and an upper end of the pedestal 23a, and only solder is present between the lower end of the pedestal 23a and the base 21 of the container. The frequency doubling crystal 20 is also directly soldered to the base 21 upon which it rests, so that the planar lower surface of the crystal 20 securely mates with the container having only solder there between. This solder is applied by using a reflow technique. A similar arrangement is shown at the output end wherein optical fiber 22b is directly soldered to its respective pedestal 23b, which is directly soldered to the base 21 of the package. No ferrules are required to house and hold the optical fibers 22a and 22b, lessening the possibility of misalignment. A thermal electric cooler (TEC) 25 is disposed beneath the base 21 and within the package, so that efficient cooling and a more rapid cooling response time can be obtained. Electrodes 29 are provided to power the TEC 25. This particular device requires the temperature to be maintained at a predetermined temperature that is within +/-.01 C.

Providing lenses on the end of the optical fibers 22a and 22b also lessen the component count within the package and reduces the coupling losses that may be associated with gluing GRIN lenses to fiber ends or adjusting optical fiber end relatively with GRIN lenses that are not required in this device. A thermistor 26 is also disposed within the package on the base 21 for temperature monitoring.

The base member 21, preferably including or consisting of stainless steel, preferably KT- stainless steel SST 403, has a coefficient of thermal expansion (CTE) that is substantially matched to the CTE of the crystal 20 to less than 5 ppm/K. If the CTE of the crystal 20 was not suitably matched to the CTE of the base member, the crystal 20 would be adversely stressed upon cooling down from the 160 °C soldering temperature. BiSn solder was used in securing the crystal 20 to the base.

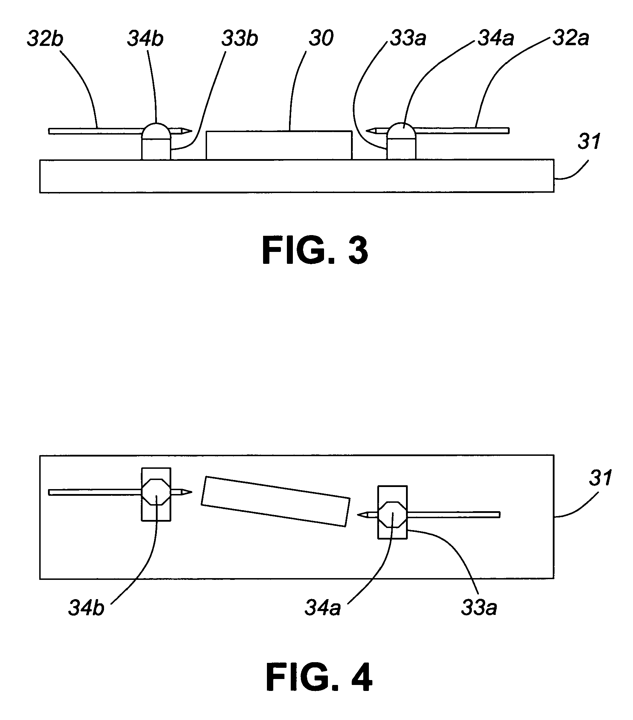

Figs. 3 and 4 illustrate the optical input and output optical fibers 32a, 32b, the pedestals or optical fiber mounts 33a and 33b, and the periodically poled lithium niobate frequency doubling crystal 30 in more detail.

In Fig. 3 the optical fiber 32a has an output end adjacent to the crystal 30 shown to have a pointed or chiseled lens tip to focus and couple light from the fiber 32a to a region near the surface of the crystal 30. Furthermore, optical fiber 32a is securely mounted to the pedestal 33a via a single solder ball 34a, made of a solder with a relatively high melting temperature Tₕ 295 C. The fiber mount 33a is secured to the base member 31 by way of having a very thin layer of solder between the mount 33a and the base member 31. A solder reflow technique is used to fixedly attach the base member 31 with the fiber mount 33a. The frequency doubling crystal 30 is also soldered to the base member 31; however, with a lower melting temperature solder, e.g. BiSn solder, having a melting temperature of approximately 160C well below Th. Thus, the crystal 30 can be relatively moved and aligned during manufacture without the risk of moving the fiber mounts 32a and 32b, which are first secured to the base 31 with high melting temperature solder of about 295C, e.g. AuSn solder.

This much more simple and elegant design having only solder joints to secure elements directly, without the use of tubes, sleeves, holders or clamps, provides a more robust device which is easier and less costly to manufacture.

The base member 31, which preferably consists of stainless steel, has a coefficient of thermal expansion (CTE) that is substantially matched to the CTE of the crystal 30 to less than 5 ppm/K. The CTE difference between periodically poled lithium niobate (PPLN) and SST403 is smaller than 2ppm/k. If the CTE of the crystal 30 was not suitably matched to the CTE of the base member, the crystal 20 would be adversely stressed upon cooling down from the 160 °C soldering temperature.

Various alignment techniques can be used to manufacture this device, such as moving one optical fiber, e.g. 32a, while keeping the other optical fiber, e.g. 32b, and the crystal 30 fixed by first securing them with solder to the base 31. Preferably this is done while applying a signal to the device via one of the optical fibers and monitoring power at the output end. Once an optimum alignment is achieved the output fiber capturing the test light can be soldered in place.

The process for aligning the device in Figs 2 and 3 is performed by the following steps:
1. Attaching the two fiber mounts (23a and 23b) and thermistor 26 to the base element 21 using AuSn solder having a melting temperature of 295C using a hot plate.
2. Attaching the base element (after step 1) to the top plate of TEC (25) and attaching the bottom plate of TEC to the bottom surface of the package using indium (160C) in a reflow oven; these two attachments are done in one step.
3. Attaching PPLN crystal waveguide sliver (20) to the top surface of the base element using BiSn (160C) on hot plate.
4. Wire bonding the TEC and thermistor to the package
5. Aligning the input fiber (22a) and soldering it on the fiber mount (23a) with AuSn (24a).
6. Aligning the output fiber (22b) and soldering it on the fiber mount (23b) with AuSn (24b).

Advantageously, this invention provides a method and device wherein two optical fibers are aligned with an optical element where all three are fixed to a common base using solder. The numerous advantages of are described heretofore.

Of course other embodiments can be envisaged without departing from the sprit and scope of this invention.

## Claims

1. A sealed container, comprising:
a) a supporting base member made of a first material;
b) a first optical fiber mount having a height h₁, wherein the first optical fiber mount has a lower end and an upper end;
c) a first optical fiber directly soldered to the upper end of the first optical fiber mount;
d) a second optical fiber mount having a lower end and an upper end and having a height h₂;
e) a second optical fiber directly soldered to the upper end of the second optical fiber mount; and,
f) a thin optical element for modifying light passing therethrough mounted in the container, wherein the thin optical element has a planar bottom surface, and wherein the planar bottom surface is directly soldered to the base member, wherein only solder is present between the planar bottom surface and the base member, and, wherein the first and second optical fibers are aligned with the thin wafer so that light launched into one of the first and second optical fibers from an end extending from the sealed container passes through the thin optical element and exits the other of the first and second optical fibers extending out of the sealed container.

2. A sealed container as defined in claim 1, wherein
the lower end of the first optical fiber mount is directly soldered to the base member so that only solder is present between the lower end of the first fiber mount and the base member; and,
wherein the lower end of the second optical fiber mount is directly soldered to the base member so that only solder is present between the lower end of the second fiber mount and the base member.

3. A sealed container as defined in claim 2, wherein h₁, is approximately equal to h₂.

4. A sealed container as defined in claim 2, wherein the base support member is fixedly coupled to the bottom of the sealed container, and wherein the sealed container is hermetically sealed.

5. A sealed container as defined in claim 2 wherein the CTE of the first material is matched to the CTE of the thin optical element to within 3-5 ppm/K.

6. A sealed container as defined in claim 5 wherein the thin optical element comprises a crystalline material.

7. A sealed container as defined in claim 5 wherein the thin optical element comprises a birefringent material.

8. A sealed container as defined in claim 2 wherein the first and second fiber mounts are soldered to the base member with a first solder; and the thin wafer is soldered to the base member with a second solder, different from the first solder.

9. A sealed container as defined in claim 8 wherein second solder has a lower melting point than the first solder to enable the first and second fiber mounts to be adjusted during assembly, while keeping the thin wafer fixed to the base

10. A sealed container as defined in claim 9, wherein the second solder comprises BiSn solder; and wherein the first solder comprises AuSn solder.

11. A sealed container as defined in claim 2 further comprising a thermal electric cooler disposed within the sealed container for cooling and maintaining the temperature within the sealed container to within predetermined limits.

12. A sealed container as defined in claim 2 wherein the first material comprises stainless steel.

13. A method of manufacturing a sealed container, comprising:
a) providing a supporting base member made of a first material;
b) providing a first optical fiber mount having a height h₁, wherein the first optical fiber mount has a lower end and an upper end;
c) providing a first optical fiber;
d) directly soldering the first optical fiber to the upper end of the first optical fiber mount;
d) providing a second optical fiber mount having a lower end and an upper end and having a height h₂;
e) providing a second optical fiber;
f) directly soldering the second optical fiber to the upper end of the second optical fiber mount; and,
g) providing a thin optical element having a planar bottom surface, for modifying light passing therethrough; and,
h) mounting the thin optical element in the container by directly soldering the planar bottom surface and the base member together, wherein the first and second optical fibers are aligned with the thin wafer so that light launched into one of the first and second optical fibers from an end extending from the sealed container passes through the thin optical element and exits the other of the first and second optical fibers extending out of the sealed container.

14. A method as defined in claim 13, wherein the solder used for soldering the thin optical element with the base member, has a lower melting temperature than the solder used to solder the first optical fiber with the first optical fiber mount.
